# EUROPEAN PATENT APPLICATION

(11) **EP 2 874 442 A1**
(43) Date of publication of application: **20.05.2015**
(21) Application number: 13804228.8
(22) Date of filing: 05.06.2013
(51) Int. Cl.: H04W 48/08

(54) **STATE CONTROLLING METHOD, STATE CONFIGURING METHOD, AND APPARATUS FOR USER EQUIPMENT FUNCTION MODULE**

(30) Priority: 13.06.2012 CN 201210194277
(71) Applicant: ZTE Corporation, Shenzhen, Guangdong 518057 (CN)
(72) Inventor: WANG, Xin, Shenzhen, Guangdong 518057 (CN); HE, Feng, Shenzhen, Guangdong 518057 (CN)
(74) Representative: Mozzi, Matteo
(86) International application number: PCT/CN2013/076816
(87) International publication number: WO 2013/185555

(57) **Abstract**

The present invention provides a method and device for controlling and configuring a state of a function module of UE. The method comprises: the user equipment receives control information from a network element of the first access network; according to the received control information, the user equipment controls the state of the function module, which is corresponding to corresponding to a second access network, of the user equipment. Through the technical solutions provided by the present invention, problems such as affecting the user experience due to that the operations of other access network supported by the user equipment cannot be controlled on the network side in related art are solved, thus realizing that the first access network controls other wireless access networks supported by the user equipment across wireless access technology, and improving the user experience.

## Description

### Technical Field

The present invention relates to the field of communications, and in particular to a method and device for controlling and configuring a state of function Module of user equipment.

### Background

With the continuous evolution of wireless communication technologies and standards, the mobile packet service is developed significantly, and the data throughout capability of the single terminal also increases continuously. Taking a long term evolution (LTE in short) system as an example, data transmission with maximum downlink rate 100 Mbps may be supported at 20 M bandwidth, and in a subsequent LTE advanced (LTE-A in short) system, the data transmission rate will be improved further, which may be even up to 1 Gbps.

The explosive increasing of the terminal data service amount makes the existing network resources to be powerless, especially in the case that the new generation communication technology (such as 3G and LTE) is still not widely deployed, the result is that user rate and traffic demands cannot be met, and the user experience grows worse. How to prevent and change this situation is an issue which the operator must take into consideration: on one hand, the promotion and network deployment of the new technology need to be accelerated; and on the other hand, it is desired to achieve the purpose of rapidly improving network performance by enhancing the existing networks and technologies. It is well known that beyond the wireless network technology provided by 3rd Generation Partnership Project (3GPP in short), the currently widely applied wireless local area network (WLAN in short), especially wireless local area network based on IEEE 802.11 standard, has been widely applied to hotspot access coverage in home, enterprise and even Internet. The technical specification proposed by Wi-Fi Alliance is applied. Therefore, actually, a wireless fidelity (WiFi in short) network is usually equivalent to the WLAN network based on IEEE 802.11 standard. In the case of not causing confusion, hereinafter, a WiFi module is used to describe a wireless transceiving and processing module which supports WLAN in a network node.

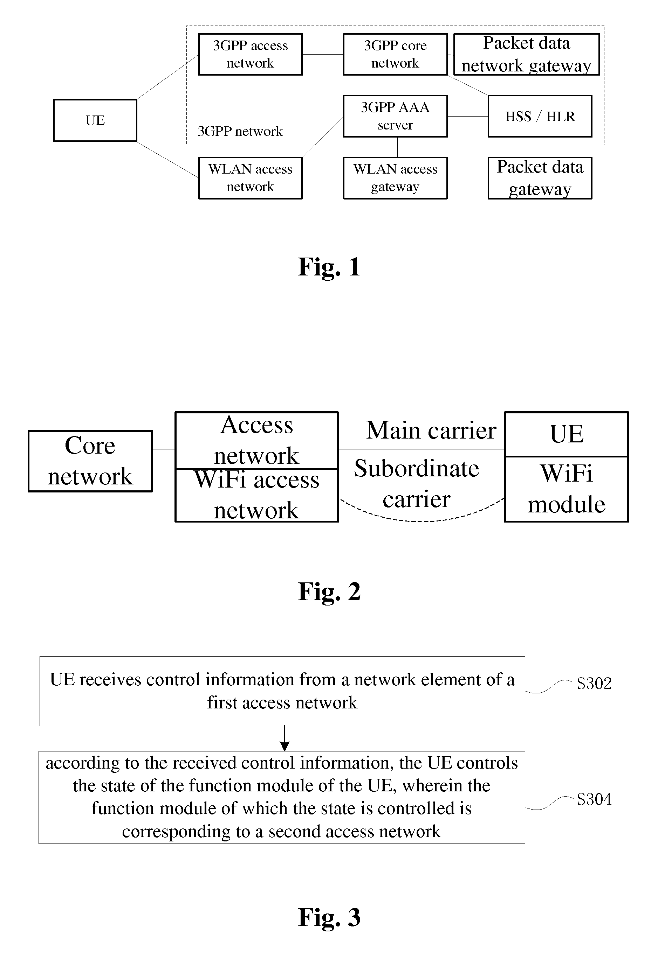

Under the above premise, some operators and companies have proposed to fuse the WLAN and the existing 3GPP network to realize joint transmission, that is, the WLAN network is used to realize the purpose of offloading and network performance improvement in the existing 3GPP network. The existing 3GPP has formulated a relevant protocol where the 3GPP network interworks with the WLAN network, as shown in Fig. 1, the Interworking WLAN architecture of the current 3GPP allows the WLAN network to use the Authentication Authorization Accounting (AAA in short) server in the 3GPP network to perform uniform authentication and authorization, and at the same time the packet data network gateway in the existing 3GPP network may be multiplexed as the packet data gateway of the WLAN network, and uniform accounting and billing and so on of two networks may be realized, realizing loose coupling of two networks.

However, the current Interworking architecture still has some drawbacks, for example: 1) the current Interworking is triggered by the user equipment (UE in short), the network side has no right to select the destination network, loses the right to control the UE to access a network, which causes the operator not to be able to direct the user to access his desired or the best destination network; 2) the UE does not know whether the network side (such as 3GPP network and WLAN network) supports interworking, therefore, the UE may select a destination network which cannot perform interworking with the current network; 3) when the terminal user equipment moves between the 3GPP network and the WLAN network, the switching of the data flow is relatively slow; and 4) the data flows of two networks need to pass through the 3GPP core network element, causing large load. Furthermore, another important thing is: currently, this architecture still depends on the fact that the operator may have an independent 3GPP network and an independent and complete WLAN network, which requires the operator to operate and maintain a plurality of networks simultaneously, and the operation capital expenditure (CAPEX in short) is large.

Based on the above reasons, the demand of further fusing the WLAN and 3GPP networks is proposed. Among the solutions proposed by different manufacturers, Intel proposes a network fusion solution similar to carrier aggregation, the general architecture of which is as shown in Fig. 2. WLAN no longer exists as an independent network but is merely used as a data connection for the wireless transmission between the access network and the terminal user equipment in the existing 3GPP network, while the main management on the UE by the access network and possible partial data transmission are performed over a 3GPP network based connection. This is similar to carrier aggregation, that is, the connection of the 3GPP network is used as a main carrier, and the WLAN connection established between the WiFi access network and the WiFi module on the UE as a subordinate carrier, so as to realize transmission offload over the main carrier.

There are many similar fusion architectures, however, under this type of architecture, the UE, in order to realize a plurality of networks, especially fusion transmission of the 3GPP network and the WLAN network, needs to switch on transceiving in a plurality of modes simultaneously, because the 3GPP module and the WLAN module of the terminal are independent transceiving modules, the network side cannot control the behaviour of the transceiving module of the terminal (i.e. user equipment) effectively, that is, the network side cannot control the operations of other access networks supported by the terminal, affecting user experience, for example, causing unnecessary power consumption of the terminal.

Aiming at the problem in the related art, no effective solution has been presented currently.

### Summary

The present invention provides a method and device for controlling a state of a function module of UE and a method and device for configuring a state of a function module of UE, so as to solve problems such as affecting the user experience due to the fact that the operations of other access network supported by the user equipment cannot be controlled on the network side in related art.

According to one aspect of the present invention, a method for controlling a state of a function module of user equipment (UE) is provided, comprising: the UE receives control information from a network element of the first access network; according to the received control information, the UE controls the state of the function module, which is corresponding to a second access network, of the UE.

Preferably, the UE receives the control information in the following manner: the UE receives a media access control layer element or radio resource control message from the network element of the first access network, wherein the media access control layer element and the radio resource control message carry the control information.

Preferably, the network element of the first access network determines that the control information indicates switch-on or switch-off according to offload demand of a corresponding network side and current wireless environment.

Preferably, according to the received control information, the UE controlling the state of the function module, which is corresponding to a second access network, of the UE comprises: when the control information indicates switch-on or switch-off, the UE switches on or off the function module.

Preferably, according to the received control information, the UE controlling the state of the function module, which is corresponding to the second access network, of the UE comprises: when the control information indicates wakeup or sleep, the UE performs a wakeup operation or a sleep operation on the function module, wherein in the wakeup state, the UE listens to a channel over a connection which is already established with the second access network and exchanges data with a network element of the second access network; and in the sleep state, the UE maintains the connection with the second access network but stops exchanging data with the network element of the second access network and listening to the channel.

Preferably, when the network element of the first access network determines that there is offload data to be transmitted over a carrier link between the second access network and the UE, it is determined that the control information indicates wakeup; and when the network element of the first access network determines that there is no offload data to be transmitted over the carrier link within a predetermined time period, it is determined that the control information indicates sleep.

Preferably, the control information further carries trigger information, and after the UE controls the state of the function module of the UE corresponding to the second access network according to the received control information, the method comprises: under the trigger of the trigger message, the UE controls the function module to switch from the current state to other state when a predetermined time arrives.

Preferably, the first access network is a 3rd Generation Partnership Project (3GPP) access network or a global system for mobile communication (GSM) network or a universal mobile telecommunications system network (UMTS), and the second access network is a wireless local area network (WLAN).

Preferably, the control information comprises: UE identification information, state indication information about the function module.

According to another aspect of the present invention, a method for configuring a state of a function module of UE is provided, comprising:
a network element of a first access network acquiring control information, wherein the control information is used for indicating to control the state of a function module of the UE corresponding to a second access network; and the network element of the first access network issuing the control information to the UE;
according to yet another aspect of the present invention, a device for controlling a state of a function module of UE is provided, wherein the device is provided in the UE and comprises: a receiving module configured to receive control information from a network element of a first access network; and a control module configured to, according to the received control information, control the state of a function module of the UE corresponding to a second access network.

Preferably, the receiving module is further configured to receive a media access control layer element or radio resource control message from the network element of the first access network, wherein the media access control layer element and the radio resource control message carry the control information.

Preferably, the control module is further configured to, when the control information indicates switch-on or switch-off, switch on or switch off the function module.

Preferably, the control module is further configured to, when the control information indicates wakeup or sleep, perform a wakeup operation or a sleep operation on the function module, wherein in the wakeup state, the UE listens to a channel over a connection which is already established with a second access network and exchanges data with the second access network element; and in the sleep state, the UE maintains the connection with the second access network but stops exchanging data with a network element of the second access network and listening to the channel.

Preferably, the device further comprises: a switching module configured to, in the case that the control information further carries trigger information, under the trigger of the trigger message, control the function module to switch from the current state to other state when the predetermined time expires.

According to still another aspect of the present invention, a device for configuring a state of a user equipment access network is provided, wherein the device is provided in a network element of the first access network and comprises: an acquisition module configured to acquire control information, wherein the control information is used for indicating to control a state of a function module of a user equipment (UE) corresponding to a second access network; and a sending module configured to issue the control information to the UE.

In the present invention, UE controls a function module of a second access network supported thereby according to the received control information about a first access network, so that the problems such as affecting the user experience due to that the operations of other access network supported by the user equipment cannot be controlled on the network side in related art are solved, the effects that the first access network controls other wireless access networks supported by the user equipment using across wireless access technology are realized, and the user experience is improved.

### Description of the accompanying drawings

Drawings, provided for further understanding of the present invention and forming a part of the specification, are used to explain the present invention together with embodiments of the present invention rather than to limit the present invention, wherein
Fig. 1 is a schematic diagram of network interworking protocol architecture according to the relevant art;
Fig. 2 is a schematic diagram of an Intel network fusion solution according to the relevant art;
Fig. 3 is a flowchart of a method for controlling a state of a function module of UE according to embodiment 1 of the present invention;
Fig. 4 is a structural block diagram of a device for controlling a state of a function module of UE according to embodiment 1 of the present invention;
Fig. 5 is a structural schematic diagram of a device for controlling a state of a function module of UE according to embodiment 1 of the present invention;
Fig. 6 is a flowchart of a method for configuring a state of a function module of UE according to embodiment 2 of the present invention;
Fig. 7 is a structural block diagram of a device for configuring a state of a function module of UE according to embodiment 2 of the present invention;
Fig. 8 is a schematic flowchart of a controlling method across wireless access technology according to embodiment 3 of the present invention;
Fig. 9 is a flowchart of a controlling method across wireless access technology according to embodiment 4 of the present invention; and
Fig. 10 is a flowchart of a controlling method across wireless access technology according to embodiment 5 of the present invention.

### Detailed Description of the Embodiments

The present invention is described below with reference to the accompanying drawings and embodiments in detail. Note that, the embodiments of the present invention and the features of the embodiments may be combined with each other if there is no conflict.

### Embodiment 1

Fig. 3 is a flowchart of a method for controlling a state of a function module of UE according to embodiment 1 of the present invention. As shown in Fig. 3, the method comprises:
step S302, UE receives control information from a network element of a first access network;
step S304, according to the received control information, the UE controls the state of the function module of the UE, wherein the function module of which the state is controlled is corresponding to a second access network.

In the above processing steps, since the UE may control the state of the function module corresponding to the second access network according to the control information sent by the first access network, the effect that the first access network controls the other wireless access networks supported by the user equipment across wireless access technology may be realized, thus improving user experience.

In step S304, since the UE may control the function module inside the UE according to the control information, the second access network corresponding to the function module may be controlled, thus improving user experience. For example, the state of the function module may be controlled (switch on/switch off, sleep/wakeup), thus being able to reduce unnecessary power consumption.

There are many methods for the UE to receive the control information, for example, the UE may receive a media access control layer element or radio resource control message from the network element of the first access network, wherein the media access control layer element and the radio resource control message carry the control information.

The network element of the first access network may determine that the control information indicates switch-on or switch-off according to the offload demand on the corresponding network side and the current wireless environment. For example, in the case that there is no offload data to be transmitted over the carrier link between the second access network and the UE or the current wireless environment is relatively bad (for example, the environment interference is serious, or the signal quality is relatively bad), it is determined that the control information indicates switch-off. This may save the power consumption of the user equipment effectively. In the case that there is offload data to be transmitted over the carrier link and the current wireless environment meets requirements, it is determined that control information indicates switch-on.

The control information may be represented in many forms, may be represented to indicate switch-on or switch-off, wakeup or sleep and so on. When the control information indicates switch-on or switch-off, the step S104 that the UE controls the function module according to the received control information is represented as that the UE switches on or off the function module.

As stated above, the control information may indicate wakeup or sleep, and at this moment, the UE controlling the function module according to the received control information is represented as performing a wakeup operation or a sleep operation on the function module, wherein in the wakeup state, the UE listens to a channel over a connection which is already established with a second access network and exchanges data with a network element of the second access network; and in the sleep state, the UE maintains the connection with the second access network but stops exchanging data with the network element of the second access network and listening to the channel.

In a preferred implementation of the present invention, when the network element of the first access network determines that there is offload data to be transmitted over a carrier of the second access network, it is determined that the control information indicates wakeup; and when the network element of the first access network determines that there is no offload data to be transmitted over the carrier link within a predetermined time period, it is determined that the control information indicates sleep. This may save the power consumption of the user equipment effectively.

The control information may also carry trigger information, and in this case, after the UE controls the state of a function module, which is corresponding to a second access network, of the UE according to the received control information, under the trigger of the trigger message, the UE controls the function module to switch from the current state to other state (for example, switching from switch-on to switch-off, switching from sleep to wakeup and so on) when the predetermined time expires. The trigger information may be represented as an initial value in an embodiment, and the UE starts to time according to the initial value and performs the above switching when the timer expires the predetermined time.

The first access network may include but not limited to: GSM network, UMTS, 3GPP access network, and the second access network may include but not limited to WLAN access network.

The control information may have a plurality of implementations. It may be control information which is dedicated to controlling the state of the function module, and may also be control information which is carried in other control signalling. The control information may include but not limited to: UE identification information, state indication information about the function module. The state indication information may represent the above state with 1 bit, for example, 1 may be used to represent wakeup, 0 may be used to represent sleep and so on, of course, other implementations may also be employed, which is not limited to this.

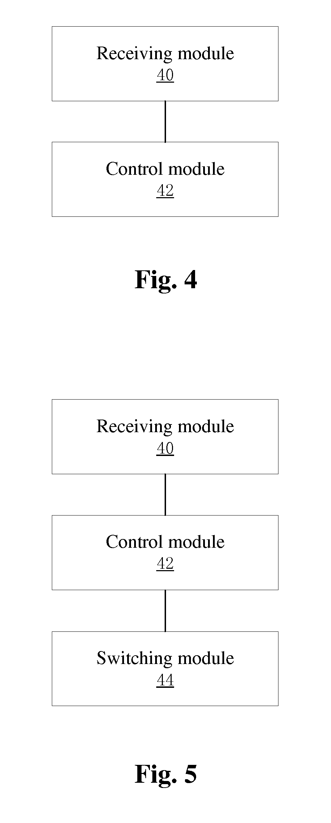

In this embodiment, a device for controlling a state of a function module of UE is also provided, which is provided in the UE, for implementing the above embodiments and preferred implementations, and those which have been described will not be described any more, hereinafter, the modules involved in this device will be described. As used hereinafter, the term "module" may realize a combination of software and/or hardware with preset functions. Although the device described in the following embodiments is realized with software more preferably, hardware or a combination of software and hardware is also possible and conceivable. Fig. 4 is a structural block diagram of a device for controlling a state of a function module of user equipment according to embodiment 1 of the present invention. As shown in Fig. 4, the device comprises:
a receiving module **40** connected to a control module **42** and configured to receive control information from a network element of a first access network; and
the control module **42** configured to, according to the received control information, control the state of the function module, which is corresponding to a second access network, of the UE.

Similar to the above method embodiment, the functions realized by the receiving module and the control module enable the UE to control the state of the function module corresponding to the second access network according to the control information issued by the first access network, the effect that the first access network controls the other wireless access networks supported by the user equipment across wireless access technology is realized, thus improving user experience.

In a preferred implementation of the present invention, the receiving module **40** is further configured to receive a media access control layer element or radio resource control message from the network element of the first access network, wherein the media access control layer element and the radio resource control message carry the control information.

The control module **42** is further configured to, when the control information indicates wakeup or sleep, perform a wakeup operation or a sleep operation on the function module, wherein in the wakeup state, it listens to a channel over a connection which is already established with the second access network and exchanges data with a network element of the second access network; and in the sleep state, it maintains the connection with the second access network but stops exchanging data with the network element of the second access network and listening to the channel.

Preferably, as shown in Fig. 5, the device may further comprise but not limited to: a switching module **44** connected to the control module **42** and configured to, in the case that the control information further carries trigger information, under the trigger of the trigger message, control the function module to switch from a current state to other state when a predetermined time arrives.

### Embodiment 2

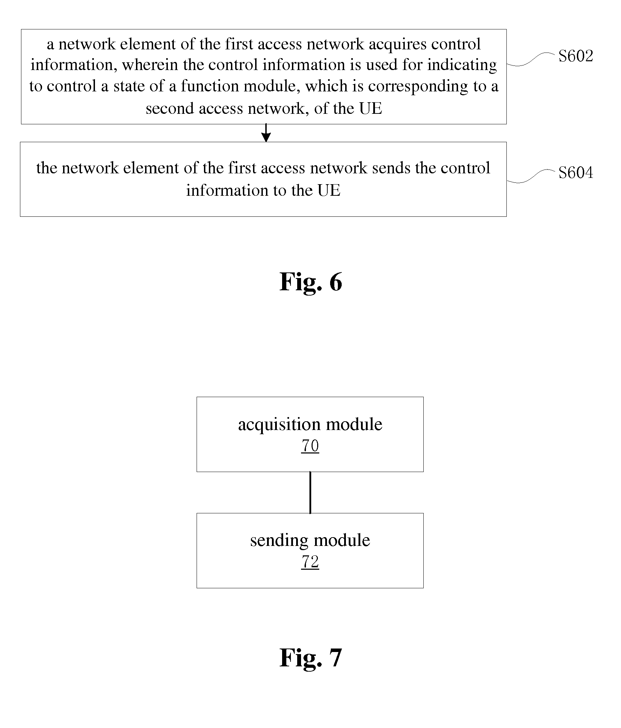

This embodiment corresponds to embodiment 1, which will be described from the network side, and Fig. 6 is a flowchart of a method for configuring a function module of UE according to embodiment 2 of the present invention. As shown in Fig. 6, the method comprises:
step S602, a network element of the first access network acquires control information, wherein the control information is used for indicating to control a state of a function module, which is corresponding to a second access network, of the UE; and
step S602, the network element of the first access network sends the control information to the UE.

In the above processing steps, the network element of the first access network issues the acquired control information to the UE, so that the UE may control the state of the function module corresponding to the second access network according to the control information issued by the first access network for the second access network supported thereby (that is, UE), the effect that the first access network controls the other wireless access networks supported by the user equipment across wireless access technology is realized, further improving user experience.

In step S602, the network element of the first access network may acquire the control information in many manners, for example, it may be generated by the network element of the first access network, or preset locally, or acquired from other devices (for example, a third party device).

In the embodiment, a device for controlling a state of a function module of UE is also provided, wherein the device is located in a network element of a first access network. As shown in Fig. 7, the device comprises:
an acquisition module **70** connected to a sending module **72** and configured to acquire control information, wherein the control information is used for indicating to control a state of a function module, which is corresponding to a second access network, of the UE; and
the sending module **72** configured to send the control information to the UE.

For better understanding the above embodiment 1 and embodiment 2, they will be described in conjunction with embodiment 3 to embodiment 5 and relevant figures. Before describing the following implementation in detail, the design concept of the following embodiment will be described briefly as follows:
the following embodiment relates to a method for controlling a transceiving module of UE across radio access technologies, wherein the method is applied in a mobile communication system about wireless local area network communications. Through the above method, more flexible scheduling and control of the UE by the network side are realized, power consumption of the UE is saved, and at the same time the compatibility of the WLAN protocol is ensured. In order to achieve the above purpose, the following key processing procedures may be included:
   UE receives a control signalling sent from a network element of 3GPP access network, which contains control information for controlling a WiFi module; and
   the UE decides to perform a corresponding operation on the WiFi module according to the received control information for controlling the WiFi module.

In the following embodiment, the network element of the 3GPP access network may be a node of an access network which may employ one of different radio access technologies (RAT in short) of 3GPP. For example, the network element of the 3GPP access network may be an evolved node B (eNB in short) in an LTE network; the network element of the 3GPP access network may be a radio network controller (RNC in short) and a node B in a UMTS network (collectively referred to as radio network subsystem RNS); and the network element of the 3GPP access network may be a base station controller (BSC in short) and a base transceiver station (BTS in short) in a GSM network (collectively referred to as base station system BSS).

In the following embodiment, the UE is a multi-mode terminal which supports WLAN and at least one 3GPP RAT.

The control signalling may be issued to the UE via a media access control control element (MAC CE in short) or a radio resource control (RRC in short) message.

In the following embodiment, the control information for controlling the WiFi module may realize the control of the state of the WiFi module of the terminal, wherein the state of the WiFi module may include:
switch on/switch off:
   switch on: the WiFi module of the UE starts to operate, such as scanning a WLAN channel, establishing an association with a WLAN access network and so on.
   switch off: the WiFi module of the UE stops operating and disconnects the association with the WLAN access network.
Wakeup/sleep:
   wakeup state: the UE listens to a channel and receives/sends data over the already established WLAN carrier.
   sleep state: the UE maintains the connection to a WLAN access point (AP in short), but no longer receives/sends data; optionally, the UE no longer listens to the WLAN channel. The wakeup/sleep state is merely suitable for the case that the WiFi is in a switch-on state.

The wakeup/sleep state of the WiFi module of the UE is indicated by a control plane signalling sent by a network element of the 3GPP access network; the switch-off/sleep state of the WiFi module of the UE may be indicated by a control plane signalling sent by the network element of the 3GPP access network; or a state timer may be set, and when the state timer expires, the WiFi module of the UE enters/leaves a certain state.

In the following implementation, the network element of the 3GPP access network may instruct the UE to switch on the WiFi module and establish an association with the WLAN access network according to the demand of the network side. If it is determined that there is offload data to be transmitted over the WLAN connection, the network element of the 3GPP access network instructs the WiFi module of the UE to enter a wakeup state; and if there is not offload data to be transmitted over the WLAN connection temporarily, the network element of the 3GPP access network instructs the WiFi module of the UE to enter a sleep state (rather than releasing this WLAN carrier); and if the network side determines that there will be no offload demand any more, the network element of the 3GPP access network instructs the UE to switches off the WiFi module. Therefore, the solution of the present invention enables the 3GPP network to control the WLAN transceiving module of the UE across RAT, thus saving the power consumption of the dual-mode/multi-mode terminal and improving user experience.

### Embodiment 3

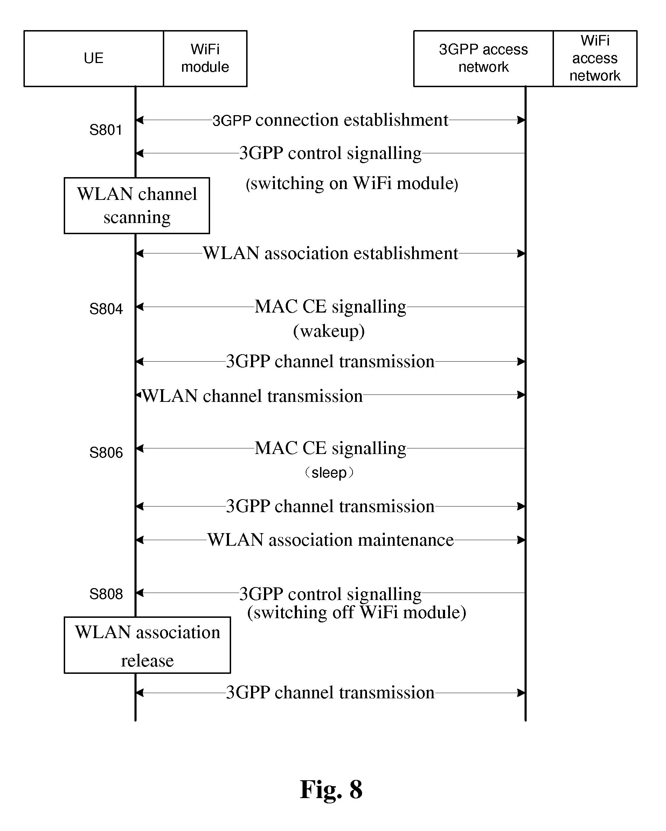

As shown in Fig. 8, a network element of the 3GPP access network refers to an LTE eNB, and the UE is a dual-mode/multi-mode mobile phone which at least supports LTE and WLAN; and an MAC CE may be selected as the control plane signalling.

Step S802, the UE accesses an LTE cell, and establishes a wireless connection with the eNB.

According to an instruction of the 3GPP access network, the UE switches on a WiFi module, and after performing scanning and performing possible information interaction with the eNB, the UE establishes an association with the WiFi access network (this WiFi access network is deployed by the operator and may perform data joint transmission with the 3GPP access network). After the WLAN association is established successfully, the eNB may instruct the UE to add this WLAN connection as a subordinate carrier for transmitting offload data.

Step S804, when the eNB determines that there is offload data to be transmitted over the WLAN carrier, the eNB instructs the UE to perform channel listening, data transmission and possible channel quality measurement report over the WLAN carrier via an LTE control plane signalling, such as MAC CE, that is, instruct the WiFi module of the UE to enter a "wakeup" state.

After receiving the control information, the UE and the network side may transmit data over the WLAN carrier, and transmit a control signalling and possible user data over the LTE carrier.

The control and scheduling of the MAC CE are dynamic and rapid. Furthermore, this control information may be indicated with 1 bit simply, such as, indicating "wakeup" with "1" (correspondingly, indicating "sleep" with "0").

Step S806, when the eNB does not have data to be offloaded to the WLAN carrier temporarily, the eNB may instruct the WiFi module of the UE to enter a "sleep" state via the MAC CE.

After receiving the control information, the WLAN association between the UE and the WiFi access network still keeps (that is, the connection will not be disconnected due to no message transmission over the channel within a period of time) but procedures such as channel listening, data transmission and possible channel quality measurement report and so on will no longer be performed; and the WiFi module in a sleep state consumes very few power. All the control signalling and user data between the UE and the network side are transmitted over the 3GPP carrier.

For the UE the WiFi module of which is in the sleep state, when the network side has data to be offloaded to the WLAN carrier again, the eNB first wakes up the WiFi module of the UE (as step S302, at this moment, the eNB may cache data), and sends the data to the UE via the WLAN channel after the UE has been prepared.

Step S808, if the network side determines that there is no offload demand within a period of time (such as in an office building in the night), the eNB may instruct the UE to release the association with the WLAN access network via a control plane signalling, and switch off the WiFi module; and the UE only keeps the connection with the 3GPP network.

### Embodiment 4

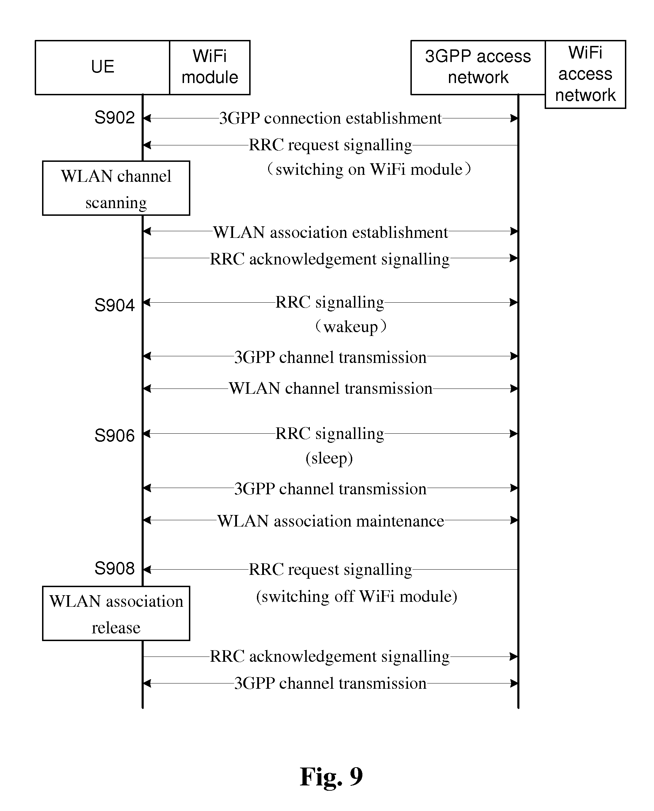

As shown in Fig. 9, the UE is a dual-mode/multi-mode mobile phone which at least supports 3GPP and WLAN; and the control plane signalling may select an RRC message.

Step S902, the UE accesses an LTE cell, and establishes a wireless connection with the 3GPP access network.

According to the demand of the network side, the 3GPP access network may instruct the UE to switch on the WiFi module via an RRC request signalling, and the UE establishes an association with a suitable WiFi access network after performing scanning and interacting possible information with the 3GPP access network.

After the WLAN association is established successfully, the UE informs the 3GPP network of the information via a corresponding RRC acknowledgement signalling.

Step S904, when a network element of the 3GPP access network determines that there is offload data to be transmitted over the WLAN carrier, the network element of the 3GPP access network instructs the WiFi module of the UE to enter a "wakeup" state via a control plane signalling, such as an RRC message.

This RRC message may be an existing RRC signalling, such as an RRC connection reconfiguration message or other newly added air interface message (this newly added message may be unidirectional, that is, the UE need not to reply).

After the network element of the 3GPP access network receives the RRC message (such as an RRC connection reconfiguration complete message) replied by the UE that the WiFi module has been waken up, the UE and the network side may transmit data over the WLAN carrier, and transmit a control signalling and possible user data over the 3GPP carrier.

Step S906, when the network side does not have data to be offloaded to the WLAN carrier temporarily, the network element of the 3GPP access network may instruct the WiFi module of the UE to enter a "sleep" state via an RRC message. The WLAN association between the UE and the WiFi access network still keeps; and all the control signalling and user data between the UE and the network side are transmitted over the 3GPP carrier.

For the UE the WiFi module of which is in a sleep state, when the network side has data to be offloaded to the WLAN carrier again, the network element of the 3GPP access network first wakes up the WiFi module of the UE (such as step S402), and at this moment, the network element of the 3GPP access network may first send the received data to the UE over the 3GPP carrier, and sends the data to the UE via the WLAN channel after the UE has replied with a message which acknowledges wakeup.

Step S908, if the network side determines that there is no offload demand within a period of time, the network element of the 3GPP access network may instruct the UE to release the association with the WLAN access network via an RRC request signalling and switches off the WiFi module; and the UE replies with an acknowledge message to the 3GPP network to inform same after receiving the message and releasing the associated with the WLAN.

Thereafter, the UE only keeps the connection with the 3GPP network, that is, all the data and signalling are transmitted over the 3GPP channel.

### Embodiment 5

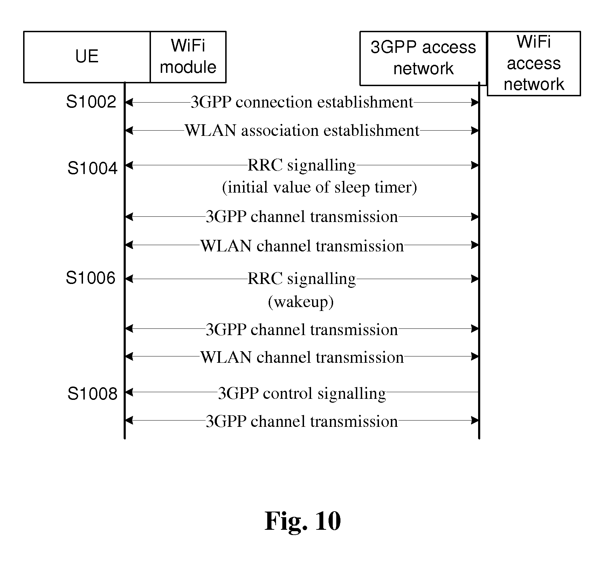

As shown in Fig. 10, the UE is a dual-mode/multi-mode mobile phone which at least supports 3GPP and WLAN; and the WiFi module of the UE is mainly controlled by a sleep state timer configured by a 3GPP network to enter a sleep state.

Step S1002, the UE accesses an LTE cell, and establishes a wireless connection with a 3GPP access network.

The UE establishes an association with a WLAN access network in response to an instruction of a signalling of the 3GPP access network.

Step S1004, when the UE and the 3GPP access network transmit a control signalling and possible user data via a 3GPP carrier and transmit offload user data via a WLAN carrier, the 3GPP access network may configure a sleep state timer for the UE simultaneously. When the sleep state timer expires, the WiFi module of the UE enters a sleep state. The initial value of the sleep state timer may be instructed to the UE via an RRC message by a network element of the 3GPP access network.

This RRC message may be an existing RRC signalling, such as an RRC connection reconfiguration message or other newly added air interface message (this newly added message may be unidirectional, that is, the UE need not to reply).

Furthermore, the sleep state timer may be applied in conjunction with the solution that the control plane signalling displays the instruction. That is, the RRC connection reconfiguration message indicates to wakeup the WiFi module of the UE. The RRC connection reconfiguration message carries the initial value of the sleep state timer simultaneously. After replying with an RRC connection reconfiguration complete message, the UE starts to receive data over the WLAN carrier and at the same time the timer starts to keep timing; and each time data is received, the timer is cleared and reset. The WiFi module of the UE enters the sleep state when the sleep state timer expires.

Step S1006, for the UE the WiFi module of which is in the sleep state, when the network side has data to be offloaded to the WLAN carrier again, the network element of the 3GPP access network first wakes up the WiFi module of the UE and sends the data to the UE via the WLAN carrier.

As stated above, the solution of the sleep state timer being applied in conjunction with the MAC CE signalling refers to that the network side may wake up the WiFi module of the UE via an MAC CE, and configures the initial value of the sleep state timer for the UE via an RRC signalling.

If the UE receives a control signalling (MAC CE or RRC message) which indicates the WiFi module to enter the sleep state when the sleep state timer has not timed out, then the UE sets the WiFi module to enter the sleep state.

Step S1008, if the network side determines that there is no offload demand within a period of time, the 3GPP access network control signalling instructs the UE to release the association with the WLAN access network first and switches off the WiFi module. Thereafter, the UE only keeps the connection with the 3GPP network, that is, all the data and signalling are transmitted over the 3GPP channel.

Optionally, the state timer may also be set as a "wakeup state timer" or a timer for controlling other states of the function module. The operation of the timer may be referred to the forging in particular, which will not be described here.

In another embodiment, also provided is software, which is used for performing the technical solution described in the above embodiments and preferred implementations.

In another embodiment, also provided is a storage medium, which stores the above software and includes but not limited to: optical disk, soft disk, hard disk, erasable storage and so on.

Obviously, those skilled in the art should know that each of the mentioned modules or steps of the present invention may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device; and under some circumstances, the shown or described steps may be executed in different orders, or may be independently manufactured as each integrated circuit module, or multiple modules or steps thereof may be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention.

## Claims

1. A method for controlling a state of a function module of user equipment (UE), **characterized by** comprising:
the UE receiving control information from a network element of a first access network; and
the UE controlling the state of the function module of the UE according to the received control information, wherein the function module of which the state is controlled is corresponding to a second access network.

2. The method according to claim 1, **characterized in that** the UE receives the control information in the following manner:
the UE receiving a media access control layer element or radio resource control message from the network element of the first access network, wherein the media access control layer element and the radio resource control message carry the control information.

3. The method according to claim 1, **characterized in that** the network element of the first access network determining that the control information indicates switch-on or switch-off according to offload demand of a network side corresponding to the network element of the first access network and current wireless environment.

4. The method according to claim 1, **characterized in that** the UE controlling the state of the function module, which is corresponding to the second access network, of the UE according to the received control information comprises:
the UE switching on or off the function module when the control information indicates switch-on or switch-off.

5. The method according to claim 1, **characterized in that** the UE controlling the state of the function module, which is corresponding to the second access network, of the UE according to the received control information comprises:
when the control information indicates wakeup or sleep, the UE performing a wakeup operation or a sleep operation on the function module, wherein if the function module is in a wakeup state, the UE listens to a channel over a connection which is already established with the second access network and exchanges data with a network element of the second access network; and if the function module is in a sleep state, the UE maintains a connection with the second access network but stops exchanging data with the second access network element and listening to the channel.

6. The method according to claim 1, **characterized in that**
when the network element of the first access network determines that there is offload data to be transmitted over a carrier link between the second access network and the UE, it is determined that the control information indicates wakeup; and when the network element of the first access network determines that there is no offload data to be transmitted over the carrier link within a predetermined time period, it is determined that the control information indicates sleep.

7. The method according to any one of claims 1 to 6, **characterized in that** the control information further carries trigger information, and after the UE controls the state of the function module, which is corresponding to the second access network, of the UE according to the received control information, the method comprises:
the UE, triggered by the trigger message, controlling the function module to switch from a current state to other state when a predetermined time expires.

8. The method according to any one of claims 1 to 6, **characterized in that** the first access network is a 3rd Generation Partnership Project (3GPP) access network or a global system for mobile communication (GSM) network or a universal mobile telecommunications system network (UMTS), and the second access network is a wireless local area network (WLAN).

9. The method according to any one of claims 1 to 6, **characterized in that** the control information comprises: UE identification information and state indication information about the function module.

10. A method for configuring a state of a function module of user equipment (UE), **characterized by** comprising:
a network element of a first access network acquiring control information, wherein the control information is used for indicating to control the state of the function module, which is corresponding to a second access network, of the UE; and
the network element of the first access network sending the control information to the UE.

11. A device for controlling a state of a function module of user equipment (UE), **characterized in that** the device is provided in the UE and comprises:
a receiving module configured to receive control information from a network element of a first access network; and
a control module configured to, according to the received control information, control the state of the function module, which is corresponding to a second access network, of the UE.

12. The device according to claim 11, **characterized in that** the receiving module is further configured to receive a media access control layer element or radio resource control message from the network element of the first access network, wherein the media access control layer element and the radio resource control message carry the control information.

13. The device according to claim 11, **characterized in that** the control module is further configured to, when the control information indicates switch-on or switch-off, switch on or switch off the function module.

14. The device according to claim 11, **characterized in that** the control module is further configured to, when the control information indicates wakeup or sleep, perform a wakeup operation or a sleep operation on the function module, wherein if the function module is in a wakeup state, the UE listens to a channel over a connection which is already established with a second access network and exchanges data with the second access network element; and if the function module is in a sleep state, the UE maintains the connection with the second access network but stops exchanging data with a network element of the second access network and listening to the channel.

15. The device according to any one of claims 11 to 14, **characterized in that** the device further comprises:
a switching module configured to, in the case that the control information further carries trigger information, under the trigger of the trigger message, control the function module to switch from a current state to other state when a predetermined time expires.

16. A device for configuring a state of a user equipment (UE) access network, **characterized in that** the device is provided on a network element of a first access network and comprises:
an acquisition module configured to acquire control information, wherein the control information is used for indicating to control a state of a function module, which is corresponding to a second access network, of the UE; and
a sending module configured to send the control information to the UE.
